# EUROPEAN PATENT SPECIFICATION

(11) **EP 1 478 511 B1**
(45) Date of publication and mention of the grant of the patent: **12.03.2008**
(21) Application number: 02717032.3
(22) Date of filing: 01.03.2002
(51) Int. Cl.: B32B 37/06, B32B 37/10

(54) **INSTALLATION AND PROCESS FOR CONTINUOUS AND INTERMITTENT PRODUCTION OF LAMINATES, WITH A MULTI-STAGE PRESS**
ANLAGE UND VERFAHREN ZUR KONTINUIERLICHEN UND INTERMITTIERENDEN HERSTELLUNG VON LAMINATEN MIT EINER MEHRSTUFENPRESSE
INSTALLATION ET PROCEDE DE PRODUCTION INTERMITTENTE ET CONTINUE DE STRATIFIES A L'AIDE D'UNE PRESSE A PLUSIEURS ETAGES

(30) Priority: 26.02.2002 IT MI20020374
(43) Date of publication of application: 24.11.2004
(73) Proprietor: Thermo Engineering SRL, Verona (IT)
(72) Inventor: STABILE, Aldo, I-26016 Crema (IT)
(74) Representative: Mocchetti, Ilio G.
(86) International application number: PCT/IT2002/000128
(87) International publication number: WO 2003/072358

(56) References cited:
- US-A- 4 406 719
- US-A- 4 543 147
- US-A- 4 863 546
- US-A- 4 921 569

## Description

The invention concerns continuous installations for producing laminates of various materials.

Pressing and heating installations, used for sticking together two-dimensional elements of various kinds to obtain products possessing specific technical characteristics (thickness, dimensions, mechanical resistance, appearance), required for numerous structural compositions, are in common use.

The evolution of technology and of materials has been such that it is now possible to produce laminates of every kind, laminates made of paper, plastic, resin-impregnated fabrics, wood, rubber, multi-compositions.

In order to generate the physical phenomena of pressure and heat, essential for lamination, "hot" presses are used, namely, those able to generate pressure and heat at the same time.

Multi-plate presses have been designed for the purpose of reducing costs and to be used for a pile of packages of the material to be pressed and heated, each package, separated by a thick sheet of steel, becoming a laminate at each processing cycle.

While pressure is substantially applied in an equal degree to each package of the pile put into the press, considerable difficulties are encountered over providing an even amount of heat, by conduction from the heated plates, both horizontally and vertically, to all the packages in the pile and to all their components.

Not only does this mean that the height of the pile of packages must be limited but also that the processing cycle must be appreciably lengthened so that the difference in temperature between one package and another is not such as adversely to affect the result, namely the high quality of the product.

To make up for a consequently lower rate of productivity, increasingly larger presses have been built to obtain the highest possible quantity per m² of laminates per cycle.

With the same aim of lowering costs, little by little the press has been replaced by real integrated installations including not only the press but also areas and structures for preparing packages, moving them, loading and later unloading the press, dividing up packages, washing and brushing the steel separation sheets.

Alternative systems have been designed to obtain continuous transformation of a composite band, namely one comprising strips of different materials to be stuck together, into a laminate, subjecting the composite band to heat and pressure during its passage through a suitably sized press.

Results have however been unsatisfactory especially as regards the quality of the product due to complexity of the system involved.

The invention here described permits a considerably greater output while ensuring maximum precision and quality of the product as will now be explained.

US 4,863,546 patent document discloses a method and equipment for manufacturing plastic cards, for example, credit cards and the like from a continuous lay-up including generally two plastic cover leaves and a printed insert. The plastic leaves to be heat sealed and the printed inserts are unwound from respective reels and the composite strap is fed through a plurality of press zones in which the lay-up is heated and subsequently cooled. The feed is performed by means of two heat conducting, preferably metallic, endless bands one of which carries pegs centrally disposed along its length which interengages with registration holes in the lay-up and the other cooperating metallic band to drive the bands and lay-up synchronously through the press zones. The metallic bands are supported by input rolls and output rolls and constitute two parallel belts with the lay-up in-between. The plurality of press zones is obtained by a plurality of presses, a fraction of which in the advancing direction is electrically heated, while the remaining is water cooled.

The feeding mechanism based on pegs and holes and a double endless belts is too complicated and only suitable for mass production of very thin laminates, like plastic cards, but not equally suitable for mass production of thicker multi-layer laminates including plastic materials.

Subject of the invention is an installation for the production of multi-layer laminates, including laminates of plastic material, as described in claim 1. Other profitable features are described in the dependent installation claims.

Another object of the invention is a process for the production of laminates, including multi-layer laminates of plastic materials, as described in claim 11. Other profitable features are described in the dependent process claims..

According to the invention, the press is multi-stage and executes a work cycle, the various phases, of equal length, being distributed among the stages of the press, each stage carrying out a phase following that done in the preceding stage, the composite band being moved, at the end of each phase, from one stage to another.

When operating at its steady rate, production of each laminate takes a time corresponding to that of the work cycle divided by the number of stages.

The fixed and movable plates of the press work together in the various stages.

The composite band comprises several strips of pre-preg associated to a copper strip on one or on both faces of said composite band.

The different stages are aligned to allow easy transfer of the composite band from one stage to another.

Constant levels of pressure and heat are generated in the stages of the press, the heat being applied so as to produce the following effects on the fractions of the composite band subjected to the specific phases of the cycle in the different stages:
- a rise in temperature, in the fraction undergoing the first phase of the cycle in the first stage of the press, from ambient to that needed for determining, by means of a catalyst, the chemical reaction required to stick the components of the composite band together;
- a rise in the first-stage temperature, in the fraction undergoing the second phase of the cycle in the second stage, sufficient to polymerize the resin;
- maintenance of the temperature, reached in the preceding stages, in the fractions undergoing subsequent phases in the subsequent stages of the press, to stabilize the effects of polymerization and obtain the desired laminate;
- maintenance of pressure without heat in the fraction undergoing the subsequent phase in a subsequent stage, to allow the laminate to cool.

The composite band, even if partially transformed into laminate, can be intermittently moved along inside the multi-stage press, by means of a metal band of high electrical conductivity that, unwinding from a reel upstream of the press and winding onto a reel downstream, practically covers the entire upper surface of the fixed lower plate, said metal band supporting the product, little by little transformed from a composite band into a cold laminate ready for use.

The metal band is preferably of aluminium.

The heat needed for carrying out the phases in the stages of the press, is generated, through Joule effect, by means of the metal band that maintains contact with the electrodes for producing electric current placed at both ends of each stage.

Electric power from the generator at each stage is calculated so as to produce a specific temperature, for the phase concerned, in the fraction of the composite band present in any one stage.

The pre-preg and copper strips are fed in from reels.

The metal band for heating and carrying forward the laminates is fed from and received by the respective reels.

All the reels are run by electric motors whose times and speeds are programmed and controlled by an electronic processor which, by coordinating the specific feed rates of the strips and bands, not only ensures precise disposition and coordination of times and speeds but also makes the correct adjustments to the tensions of the pre-preg and copper strips, coordinated with the tension created by the metal laminate-carrying band to ensure the optimum cycle of movement for each one.

When production makes it possible, the composite band can be heated in all the stages by a single generator that connects two electrodes placed at the beginning and end of the several stages.

This single generator can be programmed to associate its effects with the specific generators for each stage.

In one type of execution the press comprises four heating stages, temperature of the composite band being raised in the first stage from ambient to about 130°C; in the second stage temperature of the fraction of composite band transferred from the first stage rises to about 180°C; in the third and fourth stages temperature in the fractions of composite band transferred from the preceding stages is maintained at about 180° there being comprised a cooling stage to lower the temperature of the fraction of composite band transferred in that stage, to about 40°.

Advantageously the installation can have four pairs of reels for eight strips of pre-preg and a pair of reels for two copper strips to make a composite band with eight strips of pre-preg and two of copper.

Alternatively the composite band in the various stages can be heated independently of the metal band, by a device chosen from among the possible electric, steam and gas heating devices.

This device can advantageously be mounted in the plates of the press.

The press preferably comprises 5 stages each 2.5 m long.

As the production cycle is divided into phases carried out simultaneously in each stage, if total cycle time is 20 minutes, there will be a laminate output of 2.5 m every four minutes.

In one variant of the installation, upstream of the press there is a flat surface on which to slide a group, here called the lower group, of composite band components making it possible to lay a series of multi-layer laminates on said lower group.

Due to movement of the composite band, a group, here called the upper group, of the other components of said composite band is deposited on said lower group, so creating a regular cycle of production of multi-layer laminates in the way already described.

Characteristics and purposes of the invention will be made still clearer by the following examples of its execution illustrated by diagrammatically drawn figures.

Fig. 1 Continuous installation with a muilti-stage press for plastic laminates, seen open, at the end of a cycle, longitudinal section.

Fig. 2 Plan view of the above.

Fig. 3 Installation with the press closed during a fresh cycle with a diagram of temperatures in the various stages, longitudinal section.

Fig. 4 Installation with the multi-stage press at the end of the new cycle, open, after the fractions of composite band have moved from one stage to the next for starting a fresh cycle, longitudinal section.

Fig. 5 Installation showing the multi-stage press, in the variant for multi-layer plastic laminates, open at the end of a cycle, longitudinal section.

The installation 10 comprises the multi-stage press 11 with five stages 1 to 5 formed by pairs of fixed and movable aligned plates, respectively 1 (12-13), 2 (14-15), 3 (16-17), 4 (18-19), 5 (20-21).

At the longitudinal ends of the group of fixed plates are the electrodes 30 and 31 connected by wires 32 and 33 to the generator 40 of electric current.

At the two ends of the group of fixed plates 12, 14, 16, 18, 20 are the electrodes. 35-37.

Electrodes 30 and 35 are connected to the generator 60 of electric current by the wires 50 and 51.

Electrodes 35 and 36 are connected to the generator 61 of electric current by wires 52 and 53.

Electrodes 36 and 37 are connected to generator 62 of electric current by wires 54 and 55.

Electrodes 37 and 31 are connected to the generator 63 of electric current by wires 56 and 57.

On the upper level common to the fixed lower plates 12, 14, 16, 18, 20 the aluminium band 70 can slide in the direction indicated by the arrows, unwinding from the reel 71 and winding onto the reel 72, through cylindrical transmissions 75 and 76, driven by the electric motor 170 and maintaining electrical contact with the top of the electrodes 30, 35-37, 31.

The copper strip 80, fed in from reel 81 through transmission cylinder 85, lies on said aluminium band 70.

Substantially at the level of said copper strip 80 lying inside the press 11, and upstream of the press there is a structure comprising coplanar slide surfaces 100 and 101.

The composite band 160, sliding partly on said surfaces 100 and 101, coming to rest on said copper strip 80, consists of the following pairs of pre-preg bands:
- a pair of strips 120 and 121 that unwind from the lower reels, respectively 130 and 131, guided by the cylindrical transmissions 140-142;
- a pair of strips 122 and 123 that unwind from the lower reels respectively 132 and 133 guided by cylindrical transmissions 143-145;
- a pair of strips 124 and 125 that unwind from the upper reels respectively 134 and 135 guided by cylindrical transmissions 146-148;
- a pair of strips 126 and 127 that unwind from the upper reels respectively 136 and 137 guided by cylindrical transmissions 149-151.

The copper strip 90, fed in from the reel 91 and guided by the cylindrical transmission 95, rests on said strip 125 of pre-preg.

Adherence between the pre-preg strips in each pair is assured by heating devices 155-158.

It follows that the composite band 160, comprising the pre-preg strips and the copper strips on both faces, can slide inside the press drawn along by the aluminium band 70.

Reels 71 and 72 for the aluminium band 70, reels 130-137 for the strips of pre-preg, and reels 81,91 for the copper strips, are respectively driven by motors 170-181.

These motors are programmed and operated through wires 190-193 from the processor 200 so as to avoid any anomalous tension in the strips of pre-preg and of copper when unwinding in syntony with movement of the aluminium band 70 which draws along the composite band 160 and therefore the laminates, produced by said band at each production cycle, as well.

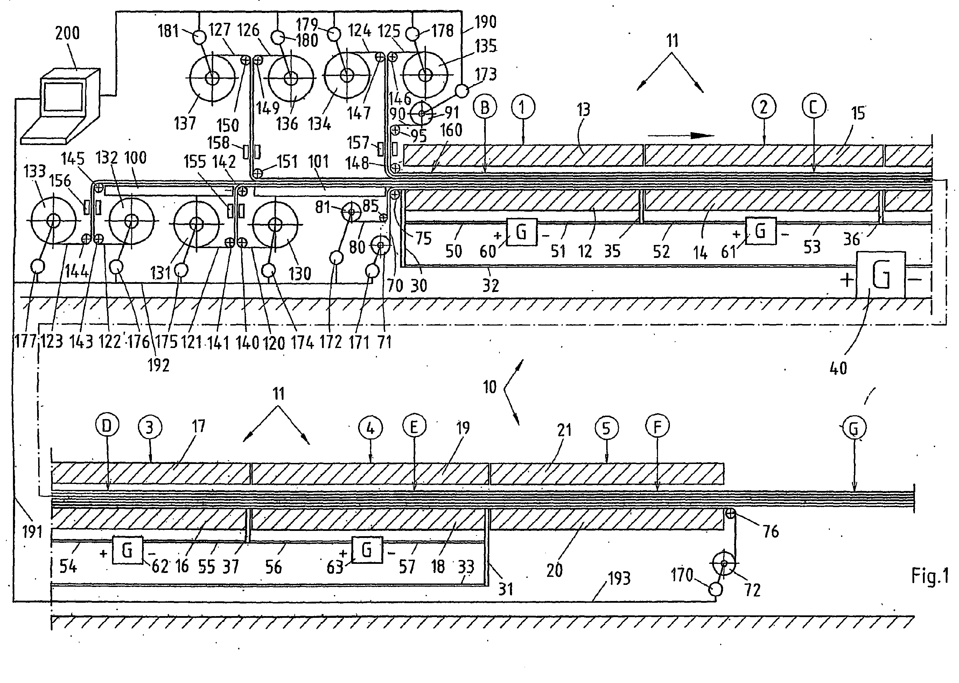

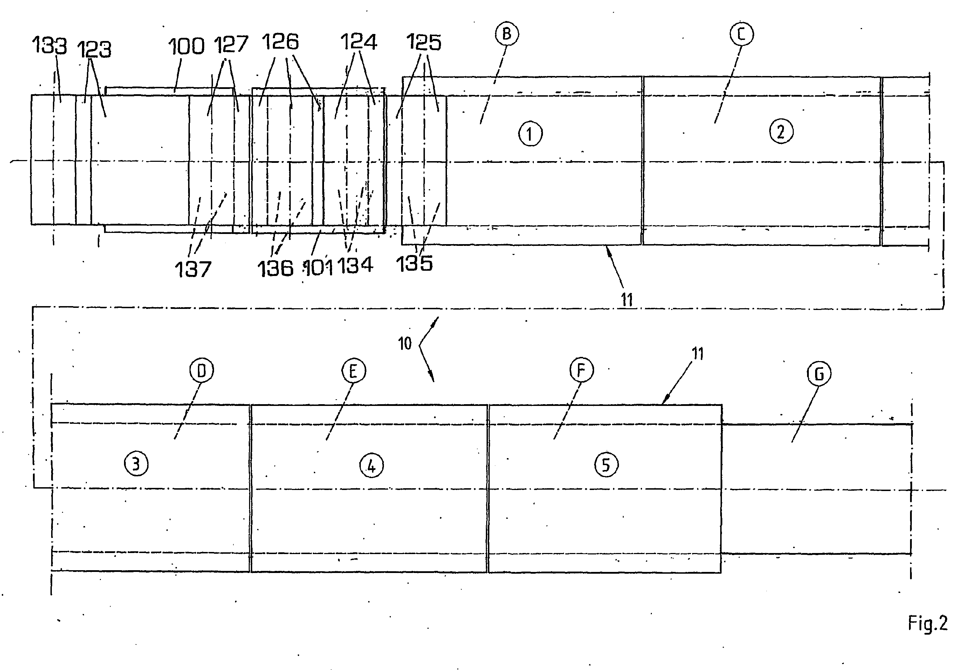

Figures 1 and 2 illustrate a phase of the installation corresponding to the end of a cycle that has generated the plastic laminate G, ready to be picked up.

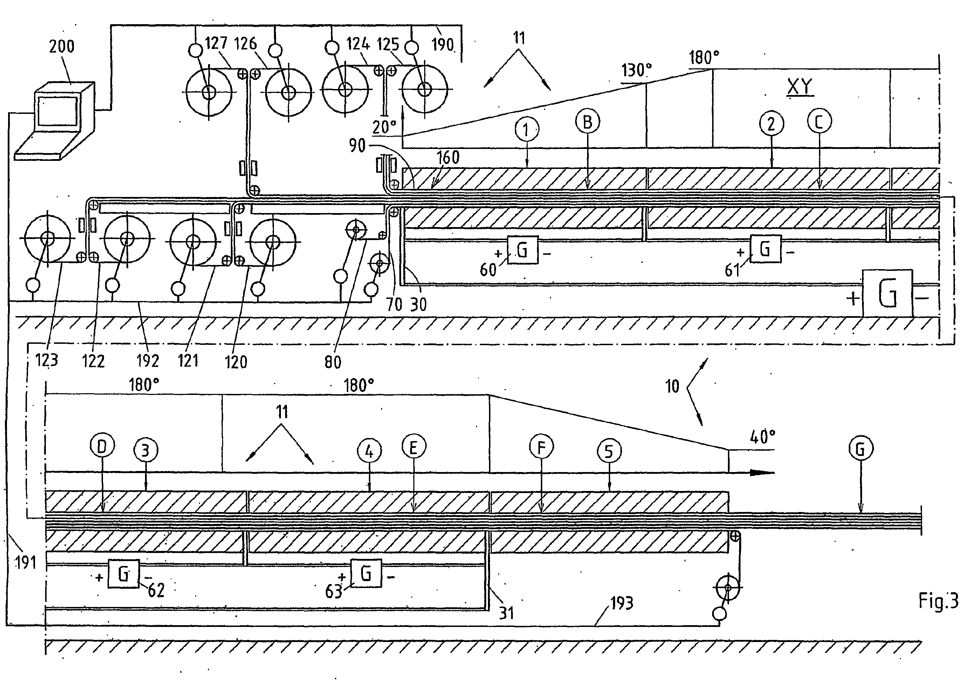

To begin a new cycle the press must obviously be closed as illustrated in Figure 3.

At each cycle the fractions B - F of the composite band 160 move from one stage to the next so as to distribute the various phases of the cycle in a substantiallyeven manner among the stages 1-5.

In said Figure 3, indication XY is given, at the top of the press, of the temperatures of fractions B - F of said composite band 160 respectively corresponding to stages 1 - 5 indicated in the abcissae of the diagram.

Temperature of the composite band 160 at entry to the press (Figure 3) may be taken as ambient temperature, presumably 20°C.

Power of the electricity generators 60-63, respectively corresponding to press stages 1-5 and therefore to fractions B, E of the composite band 160, is set so that during each cycle, at a stable level of operation, it will be found that:
- in the first fraction B, there is an increase of about 130°C in temperature from ambient level (assumed at 20°C). At 130° a catalyst is activated that causes a chemical reaction among the components of fraction B of the composite band;
- in the second stage 2, transfer has been made from stage 1 of fraction C of the composite band that, due to the effect of the preceding cycle, presents said temperature of 130°, raising it to about 180° causing polymerization of the resin;
- in the third stage 3, fraction D of the composite band, transferred from stage 2 at a temperature of 180°, is kept at that temperature;
- in the fourth stage 4, the temperature of fraction E, transferred from stage 3 at a temperature of 180°, is kept at that tempreature so producing the plastic laminate;
- in the fifth stage 5, the fraction F transferred from stage 4 at 180°, is allowed to cool down to about 40°C;
- the plastic laminate constituted by fraction G of the composite band, that was transferred from stage 5 and therefore already cool (see Figure 1), can be removed.

From the foregoing it is clear that, as the phases of the cycle are carried out simultaneously in the various stages of the press for heating and cooling, the time required for the entire production cycle is divided by the number of stages.

If the total cycle time is 20 minutes, a laminate will be produced every 4 minutes (20 ÷ 5).

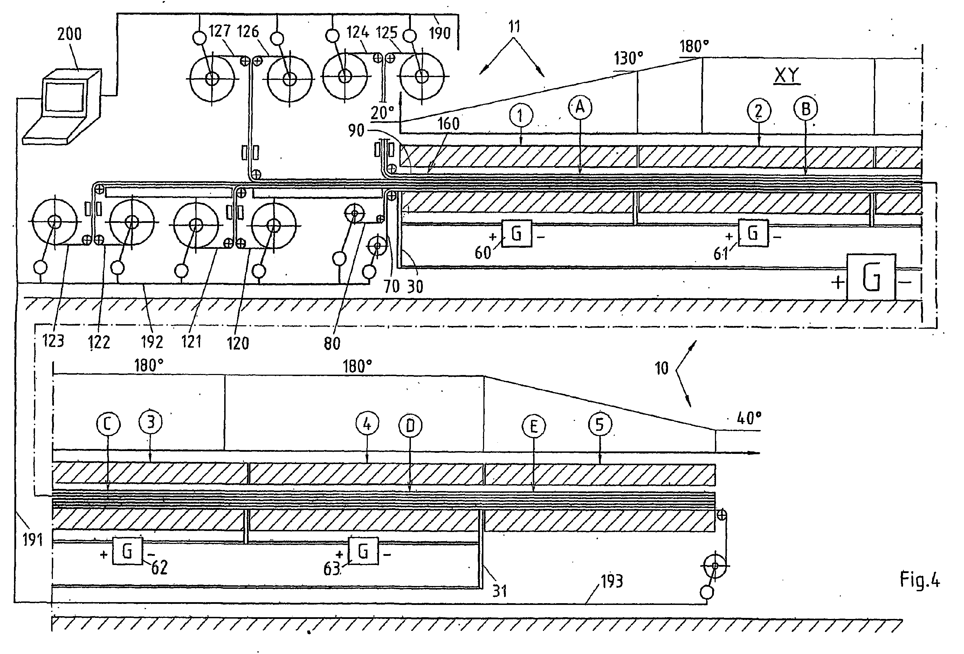

Figure 4 illustrates a new cycle, substantially identical with the previous one, except for movement of the composite band 160, and therefore of all its fractions B, C,D, E of one stage, for entry of a new fraction A of composite band, and for removal of fraction F (completed plastic laminate).

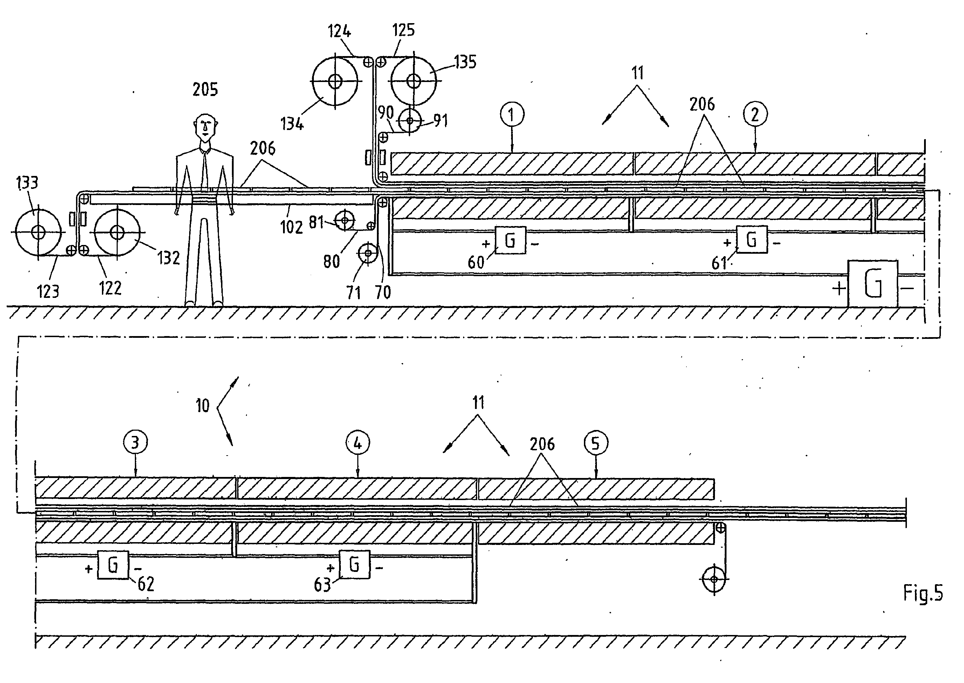

Figure 5 shows a variant of the press suited to production of multi-layer plastic laminates. The levels 100 and 101 are replaced by a single one 102 while the reels of pre-preg strips are limited to a lower pair 132, 133 of strips 122, 123 and to an upper pair 134, 135 with strips 124, 125.

During closure of the press, the operator 205 can lay a set of multi-layer laminates 206 in two rows on the pair of strips 122 and 123.

It will therefore be seen that at the start of a fresh cycle, the above multi-layer laminates 206 will be drawn inside the multi-stage press 11 by the lower pair of pre-preg strips 1.22 and 123 and inserted between said pair associated to the copper strip 70 and the upper pair of pre-preg strips 124 and 125 associated to the copper strip 90.

The cycle inside the press is carried out as already described.

The invention offers evident advantages.

Pressure and heat can be generated by two completely distinct entities:
- the plates that generate pressure,
- the electrothermic devices that generate heat.

Pressure is exerted by the plates of the press on the composite band while heat can be supplied by a thin lamina of material of high electrical conductivity which, inserted between the lower plate of the press and the laminate with electric current passing through it, generates diffused heat due to the Joule effect.

In a cold press only a small part near to the laminate can be heated.

The "division" of time needed for the cycle, namely passing from composite band to laminate, in several stages respectively used for increasing the temperature of the material from ambient to that of reaction, initiated by a catalyst, from that of reaction to that of polymerization and on to cooling of the laminate produced, utilizing in one stage the phase completed in the preceding stage, means an enormous saving of time even while achieving a product of very high quality.

The heating cycle, applied to one laminate at a time, is very quick especially in the case of plastic laminates.

The single-plate, multi-stage cold press can be much wider and longer, at equivalent cost, than present hot presses.

As the press can be fed off reels, the costly and bulky means now used for separating the packages in the pile can be eliminated, together with related equipment for loading, unloading, cleaning etc.

Feeding in material off reels, so making the press "continuous" even though intermittent, makes it possible to carry out all phases in sequence with simple automatic devices and few operators.

Materials enter the press off reels and cut and finished laminates leave it.

To summarise the advantages, the process described above makes possible a very high output of top quality at costs for investment and operation much lower than those possible at present.

## Claims

1. Installation (10) for the production of multi-layer laminates including laminates of plastic materials, the installation including:
- a multi-stage press (11) comprising sequentially aligned pressure stages (1-5) operating simultaneously;
- first reels (81, 91, 130-137) of component strips (80,90, 120-127) of the laminates upstream the multi-stage press (11);
- first electric motors (172-181) controlled (200) for unwinding said component strips from the first reels (81, 91, 130-137) arranged to form a composite band (160);
- heating means (40, 60, 61, 62, 63) arranged to heat fractions of the composite band (160) in a predetermined number of said pressure stages (1-4);
- a metal band (70) of high electrical conductivity supporting said composite band (160) inside the multi-stage press (11);
- driving means (171, 170) moving the metal band (70) for carrying forward the laminates;
- means for removal a fraction (F) of completed multi-layer laminates,
**characterized in that**:
- said driving means include second electric motors (171, 170) controlled (200) for unwinding said support metal band (70) from a second reel (71) upstream the multi-stage press (11) and winding it onto a third reel (72) downstream the multi-stage press (11).

2. The installation of claim 1, **characterized in that** said heating means include an electric generator (40) with two electrodes (30, 31) respectively placed at the beginning and at the end of the aligned pressure stages (1-4) in contact with said support metal band (70) of high electrical conductivity.

3. The installation of claim 1 or 2, **characterized in that** said heating means include as many electric generators (60, 61, 62, 63) as said predetermined number of pressure stages (1-4), each electric generator having two electrodes (30, 31, 35, 36, 37) respectively placed at the beginning and at the end of its pressure stage (1-4) in contact with said support metal band (70) of high electrical conductivity.

4. The installation of claim 1, **characterized in that** said heating means includes a device chosen from the various possible devices for heating by electricity, steam or gas.

5. The installation of claim 1, **characterized in that** each one of said pressure stages (1-5) includes a fixed lower plate (12, 14, 16, 18, 20) and a movable upper plate (13, 15, 17, 19, 21).

6. The installation of claim 5, **characterized in that** said heating device is mounted in the plates of the multi-stage press (11).

7. The installation of any claim 1 to 6, **characterized in that** said support metal band (70) is of aluminium.

8. The installation of any claim 1 to 7, **characterized in that** said composite band (160) comprises a plurality of pre-preg strips (120-127) associated, on one or both faces of said composite band, to a copper strip (80, 90).

9. The installation of claim 8, **characterized in that** said first reels (81, 91, 130-137) include four pairs of reels (130-137) for eight strips of pre-preg (120-127) and a pair of reels (81, 91) for two strips of copper (80, 90) forming a composite band (160) of eight strips of pre-preg and two strips of copper.

10. The installation of any claim from 1 to 9, **characterized in that** said predetermined number of heated pressure stages is four (1-4) out of five (1-5).

11. Process for the production of multi-layer laminates including laminates of plastic materials, by means of a multi-stage press (11) comprising heating (1-4) and cooling (5) stages, including the steps of:
- unwinding component strips (80,90, 120-127) of said laminate from first reels (81, 91, 130-137) and laying down each strips to form a composite band (160) inside the multi-stage press (11) upon a metal band of high electrical conductivity (70) supporting the composite band (160) to be laminated inside the multi-stage press (11);
- pressing adjacent fractions (B-F) of the composite band (160), simultaneously, and heating a predetermined number of them (B-E);
- moving forward said support metal band (70) and said adjacent fractions (B-F) of the composite band (160) intermittently from one pressure stage to the successive one;
- cutting and removing a fraction (F) of completed multi-layer laminates,
**characterized in that** moving forward said support metal band (70) includes:
- unwinding said support metal band (70) with high electrical conductivity from a second reel (71) upstream the multi-stage press (11);
- winding said support metal band (70) with high electrical conductivity onto a third reel (72) downstream the multi-stage press (11).

12. The process of claim 11, **characterized in that** the heating of adjacent fractions (B-E) of the composite band (160) is obtained by current circulation inside the whole support metal band (70).

13. The process of claim 11 or 12, **characterized in that** the heating of adjacent fractions (B-E) of the composite band (160) is obtained by independent current circulations inside adjacent fractions of the support metal band (70) below said adjacent fractions (B-E) of the composite band (160).

14. The process of claim 11, **characterized in that** the heating of adjacent fractions (B-E) of the composite band (160) is obtained by mounting heating device in the plates of the multi-stage press (11).

15. The process of any claim from 11 to 14, **characterized in that**:
- in the upstream first fraction (A, B) of the composite band (160) a rise in temperature is determined by effect of heating from ambient to that needed for creating among the components of the composite band (160), by means of a catalyst, the chemical reaction needed to make the components adhere together;
- in the subsequent second fraction (C) the temperature is further increased to a level at which the resin becomes polymerized;
- in the subsequent third and fourth adjacent fractions (D, E) the temperature reached by the second fraction (C) is maintained so as to stabilize the polymerization and produce the desired laminate;
- in the subsequent fifth fraction (F) the heating is removed to permit the laminate to cool down.

16. The process of claim 15, **characterized in that**:
- the temperature reached by the first upstream fraction (A, B) is about 130°C;
- the temperature reached by the second fraction (C) maintained in the third and fourth fractions (D, E) is about 180°C;
- the final temperature reached by the fifth fraction (F) is about 40°C to permit the laminate to be removed.

## Patentansprüche

1. Anlage (10) für die Fertigung mehrschichtiger Kunststofflaminate, wobei die Anlage umfasst:
- eine Mehrstufenpresse (11) mit sequentiell gereihten Druckstufen (1-5) die gleichzeitig arbeiten;
- erste Spulen (81, 91, 130-137) aus Streifen von Komponenten (80, 90, 120-127) der Laminate, aufwärts bezüglich der Mehrstufenpresse (11);
- erste Elektromotoren (172-181) mit einer Steuerung (200) fürs Ausrollen der gesagten Streifen der Komponenten aus der ersten Spulen (81, 91, 130-137), die solchermaßen positioniert werden, um ein Verbundband zu bilden (160);
- Heizmittel (40, 60, 61, 62, 63), um Teile des Verbundbandes (160) zu erwärmen, nach einer vorbestimmten Anzahl der gesagten Druckstufen (1-4);
- ein Metallband (70) hoher elektrischen Leitfähigkeit, das das gesagte Verbundband (160) im Inneren der Mehrstugfenpresse (11) stützt (11);
- Antriebsmittel (170, 171), die das Metallband (70) verlagern, um die Laminate vorzuschieben;
- Mittel, um ein Teil (F) der mehrschichtigen fertigen Laminate zu entfernen,
**dadurch gekennzeichnet, daß:**
- die gesagten Antriebsmittel zweite Elektromotoren (170, 171) umfassen, die gesteuert sind (200), um das gesagte Trägermetallband (70) aus einer zweiten Spule (71) aufwärts bezüglich der Mehrstufenpresse (11) auszurollen, und um es auf einer dritten Spule (72), abwärts bezüglich der Mehrstufenpresse (11) aufzurollen.

2. Anlage nach Anspruch 1, **dadurch gekennzeichnet, daß** die gesagten Heizmittel einen Elektrogenerator (40) umfassen, mit zwei am Anfang bzw. am Ende der Druckstufen (1-4) aufgereiht angeordneten Elektroden (30, 31), in Kontakt mit dem gesagten Trägermetallband (70) hoher elektrischer Leitfähigkeit.

3. Anlage nach Ansprüche 1 oder 2, **dadurch gekennzeichnet, daß** die gesagten Heizmittel dieselbe Menge Elektrogeneratoren (60, 61, 62, 63) als die gesagte vorbestimmte Anzahl Druckstufen (1-4) umfassen, wobei jeder Elektrogenerator zwei Elektroden (30, 31, 35, 36, 37) umfaßt, die am Anfang bzw. am Ende seiner Druckstufe (1-4) positioniert sind, in Kontakt mit dem gesagten Trägermetallband (70) hoher elektrischer Leitfähigkeit.

4. Anlage nach Anspruch 1, **dadurch gekennzeichnet, daß** der gesagte Heizmittel eine Einrichtung aufweist, die zwischen den verschiedenen möglichen Heizeinrichtungen gewählt worden ist, und mittels Elektrizität, Dampf oder Gas betrieben wird.

5. Anlage nach Ansprüche 1 oder 2, **dadurch gekennzeichnet, daß** jede der gesagten Druckstufen (1-5) eine untere feste Platte (12, 14, 16, 18, 20) und eine untere bewegliche Platte (13, 15, 17, 19, 21) aufweist.

6. Anlage nach Anspruch 5, **dadurch gekennzeichnet, daß** die gesagte Heizvorrichtung in den Platten der Mehrstufenpresse (11) montiert ist.

7. Anlage nach einem der Ansprüche 1 bis 6, **dadurch gekennzeichnet, daß** das gesagte Trägermetallband (70) aus Aluminium besteht.

8. Anlage nach einer der Ansprüche 1 bis 7, **dadurch gekennzeichnet, daß** das gesagte Verbundband (160) eine Mehrheit von Prepreg-Streifen (120-127) enthält, die auf einer oder beiden Oberflächen des gesagten Verbundbandes einem Kupferstreifen (80, 90) zugeordnet sind.

9. Anlage nach Anspruch 8, **dadurch gekennzeichnet, daß** die gesagten ersten Spulen (81, 91, 130-137) vier Spulen-Paare (130-137) für acht Prepreg-Streifen (120-127) und ein Paar Spulen (81, 91) für zwei Kupfer-Streifen (80, 90) umfassen, um ein Verbundband (160) mit acht Prepreg-Streifen und zwei Kupfer-Streifen zu bilden.

10. Anlage nach einem der Ansprüche 1 bis 9, **dadurch gekennzeichnet, daß** die gesagte vorbestimmte Anzahl geheizter Druckstufen gleich vier (1-4) über fünf (1-5) ist.

11. Verfahren für die Fertigung mehrschichtiger Kunststofflaminate, mit einer Mehrstufenpresse (11) die Heiz- (1-4) und Kühlstufen (5) aufweist, mit folgenden Arbeitsgängen:
- Ausrollen der Komponenten-Streifen (80, 90, 120-127) des gesagten Laminates aus ersten Spulen (81, 91, 130-137), und Verlegen jedes Streifens um ein Verbundband (160) im Inneren der Mehrstufenpresse (11) zu bilden, auf einem Metallband hoher elektrischer Leitfähigkeit (70), das das zu beschichtende Verbundband (160) im Inneren der Mehrstufenpresse (11) trägt;
- gleichzeitiges Pressen von angrenzenden Anteile (B-F) des Verbundbandes (160), und Aufheizen einer vorbestimmten Anzahl dieser Anteile (B-E);
- Vorschieben des gesagten Trägermetallbandes (70) und der gesagten angrenzenden Anteile (B-F) des Verbundbandes (160), mit einer alternierenden Bewegung zwischen einer Druckstufe und der folgenden;
- Schneiden und Entfernen eines Anteiles (F) der mehrschichtigen fertigen Laminate,
**dadurch gekennzeichnet, daß** das Vorschieben des gesagten Trägermetallbandes (70) folgende Arbeitsgänge umfasst:
- Ausrollen des gesagten Trägermetallbandes (70) hoher elektrischer Leitfähigkeit aus einer zweiten Spule (71), aufwärts bezüglich der Mehrstufenpresse (11);
- Aufrollen des gesagten Trägermetallbandes (70) hoher elektrischer Leitfähigkeit auf einer dritten Spule (72), abwärts bezüglich der Mehrstufenpresse (11).

12. Verfahren nach Anspruch 11, **dadurch gekennzeichnet, daß** das Aufheizen angrenzender Anteile (B-E) des Verbundbandes (160) mittels Umlauf Stromes im Inneren des gesamten Trägermetallbandes (70) erfolgt.

13. Verfahren nach Ansprüche 11 oder 12, **dadurch gekennzeichnet, daß** das Aufheizen angrenzender Anteile (B-E) des Verbundbandes (160) mittels Umlauf unabhängiger Ströme im Inneren der angrenzenden Anteile des Trögermetallbandes (70) erfolgt, unterhalb der gesagten angrenzenden Anteile (B-E) des Verbundbandes (160).

14. Verfahren nach Anspruch 11, **dadurch gekennzeichnet, daß** das Aufheizen angrenzender Anteile (B-E) des Verbundbandes (160) mittels Aufbringen einer Heizvorrichtung in die Platten der Mehrstufenpresse (11) erfolgt.

15. Verfahren nach einem der Ansprüche 11 bis 14, **dadurch gekennzeichnet, daß**:
- im ersten Anteil (A, B), aufwärts bezüglich des Verbundbandes (160), eine Erhöhung der Temperatur als Ergebnis des Aufheizens aus der Umgebungstemperatur bestimmt wird, bis zu jener Temperatur die erforderlich ist, um zwischen der Komponenten des Verbundbandes (160), mittels eines Katalysators, die chemische Reaktion zu bilden, um die Komponenten zusammenzuhaften;
- im zweiten folgenden Anteil (C) wird die Temperatur nochmals erhöht, bis zu einem Wert, bei dem das Harz polymerisiert wird;
- im dritten und vierten folgenden Anteil (D, E) wird die vom zweiten Anteil (C) erreichte Temperatur behalten, um die Polymerisation zu stabilisieren und das gewünschte Laminat zu fertigen;
- im fünften folgenden Anteil (F), wird das Aufheizen entfernt, um das Laminat kühlen zu lassen.

16. Verfahren nach Anspruch 15, **dadurch gekennzeichnet, daß**:
- die vom ersten aufwärts angeordneten Anteil (A, B) erreichte Temperatur gleich ca. 130°C ist;
- die vom zweiten Anteil (C) erreichte und im dritten und vierten Anteil (D. E) behaltene Temperatur gleich ca. 180°C ist;
- die endgültige vom fünften Anteil (F) erreichte Temperatur gleich ca. 40°C ist, um die Entfernung des Laminates zu ermöglichen.

## Revendications

1. Installation (10) pour la production de laminés multi-couche comprenant laminés plastiques, l'installation comprenant:
- une presse multi-étage (11) comprenant étages de pression (1-5) alignés en séquence et fonctionnant simultanément;
- premières bobines (81, 91, 130-137) formées par de traits de composants (80, 90, 120-127) de laminés, à mont de la presse multi-étage (11);
- premiers moteurs électriques (172-181) actionnés (200) pour dérouler les dits traits des composants des premières bobines (81, 91, 130-137) disposées de manière à former un ruban composite (160);
- moyens de chauffage (40, 60, 61, 62, 63) disposés de manière à chauffer parties du ruban composite (160) dans un nombre préétabli des dits étages de pression (1-4);
- un ruban métallique (70) de haute conductibilité électrique, qui supporte le dit ruban composite (160) à l'intérieur de la presse multi-étage (11);
- moyens d'actionnement (170, 171) qui déplacent le ruban métallique (70) pour pousser en avant les laminés,
- moyens pour enlever une partie (F) des laminés multi-couche complets,
**caractérisée en ce que**:
- les dits moyens d'actionnement comprennent deuxièmes moteurs électriques (170, 171) actionnés (200) pour dérouler le dit ruban métallique de support (70) à partir d'une deuxième bobine (71) à mont de la presse multi-étage (11) et pour l'enrouler sur une troisième bobine (72), à val de la presse multi-étage (11).

2. Installation selon la revendication 1, **caractérisée en ce que** les dits moyens de chauffage comprennent un générateur électrique (40) avec deux électrodes (30, 31) placés respectivement au commencement et à la fin des étages de pression (1-4) alignés, en contact avec le dit ruban métallique de support (70) avec une haute conductibilité électrique.

3. Installation selon les revendications 1 ou 2, **caractérisée en ce que** les dits moyens de chauffage comprennent la même quantité de générateurs électriques (60, 61, 62, 63) du dit nombre préétabli d'étages de pression (1-4), chaque générateur électrique comprenant deux électrodes (30, 31, 35, 36, 37) placés respectivement au commencement et à la fin de son étage de pression (1-4), en contact avec le dit ruban métallique de support (70) de haute conductibilité électrique.

4. Installation selon la revendication 1, **caractérisée en que** le dit moyen de chauffage comprend un dispositif choisi entre les différents possibles dispositifs de chauffage avec l'emploi d'électricité, vapeur ou gaz.

5. Installation selon les revendications 1 ou 2, **caractérisée en que** chacun des dits étages de pression (1-5) comprend une plaque inférieure fixe (12, 14, 16, 18, 20) et une plaque inférieure mobile (13, 15, 17, 19, 21).

6. Installation selon la revendication 5, **caractérisée en ce que** le dit dispositif de chauffage est monté dans les plaques de la presse multi-étage (11).

7. Installation selon l'une quelconques des revendications 1 à 6, **caractérisée en ce que** le dit ruban métallique de support (70) est en aluminium.

8. Installation selon l'une quelconque des revendications 1 à 7, **caractérisée en ce que** le dit ruban composite (160) comprend une pluralité de traits de prepreg (120-127) accouplés, sur une où les deux faces du dit ruban composite, à un trait en cuivre (80, 90).

9. Installation selon la revendication 8, **caractérisée en ce que** les dites premières bobines (81, 91, 130-137) comprennent quatre paires de bobines (130-137) pour huit traits de pre-preg (120-127) et une paire de bobines (81, 91) pour deux traits de cuivre (80, 90) pour former un ruban composite (160) avec huit traits de pre-preg et deux traits de cuivre

10. Installation selon l'une quelconque des revendications 1 à 9, **caractérisée en ce que** le dit nombre préétabli d'étages de pression chauffés est de quatre (1-4) sur cinq (1-5).

11. Procédé pour la production de laminés multi-couche, comprenant laminés plastiques à l'aide d'une presse multi-étage (11), comprenant étages de chauffage (1-4) et de refroidissement (5), comprenant les opérations suivantes:
- déroulement des traits composants (80, 90, 120-127) du dit laminé des premières bobines (81, 91, 130-137) et déposition de chaque trait de manière à former un ruban composite (160) à l'intérieur de la presse multi-étage (11), sur un ruban métallique de haute conductibilité électrique (70), qui supporte le ruban composite (160) à laminer à l'intérieur de la presse multi-étage (11);
- compression simultanée de fractions adjacentes (B-F) du ruban composite (160), et chauffage d'un nombre préétabli de ces dernières (B-E);
- déplacement en avant du dit ruban métallique de support (70) et des dites fractions adjacentes (B-F) du dit ruban composite (160), avec un mouvement intermittent d'un étage de pression au suivant ;
- coupe et enlèvement d'une fraction (F) des laminés multi-couche complets,
**caractérisé en ce que** le déplacement en avant du dit ruban métallique de support (70) comprend les opérations suivantes:
- déroulement du dit ruban métallique de support (70) de haute conductibilité électrique d'une deuxième bobine (71) à mont de la presse multi-étage (11);
- enroulement du dit ruban métallique de support (70) de haute conductibilité sur une troisième bobine (72) à val de la presse multi-étage (11).

12. Procédé selon la revendication 11, **caractérisé en ce que** le chauffage de fractions adjacentes (B-E) du ruban composite (160) est obtenu à l'aide de la circulation d'un courant à l'intérieur de l'entier ruban métallique de support (70).

13. Procédé selon les revendications 11 où 12, **caractérisé en ce que** le chauffage de fractions adjacentes (B-E) du ruban composite (160) s'obtient à l'aide de circulations de courant indépendantes à l'intérieur des fractions adjacentes du ruban métallique de support (70) au dessous des dites fractions adjacentes (B-E) du ruban composite (160).

14. Procédé selon la revendication 11, **caractérisé en ce que** le chauffage de fractions adJacentes (B-E) du ruban composite (160) s'obtient en montant un dispositif de chauffage dans les plaques de la presse multi-étage (11).

15. Procédé selon l'une quelconque des revendications 11 à 14, **caractérisé en ce que**:
- dans la première fraction (A, B) placée à mont du ruban composite (160), une augmentation de température est provoquée par le chauffage à partir de la température ambiante jusqu'à celle nécessaire pour créer entre les composants du ruban composite (160), à l'aide d'un catalyseur, la réaction chimique nécessaire pour faire adhérer entre eux les composants;
- dans la deuxième fraction suivante (C), la température est ultérieurement augmentée jusqu'à un niveau auquel la résine devient polymérisée;
- dans la troisième et la quatrième fraction suivante (D, E) la température atteinte de la deuxième fraction (C) est maintenue, de manière à stabiliser la polymérisation et à produire le laminé voulu;
- dans la cinquième fraction (F) suivante, le chauffage est enlevé pour permettre au laminé de se refroidir.

16. Procédé selon la revendication 15, **caractérisé en ce que**:
- la température atteinte par la première fraction (A, B) placée à mont est d'environ 130°C;
- la température atteinte par la deuxième fraction (C) et maintenue dans la troisième et dans la quatrième fraction (D. E) est d'environ 180°C;
- la température finale atteinte par la cinquième fraction (F) est d'environ 40°C, pour permettre d'enlever le laminé.
